(19) Europäisches Patentamt

European Patent Office

Office européen des brevets

(11) **EP 0 400 739 B1**

(12) **EUROPEAN PATENT SPECIFICATION**

(45) Date of publication and mention
of the grant of the patent:
**09.10.1996 Bulletin 1996/41**

(51) Int. Cl.$^6$: **C01B 39/00**, C01B 35/12,
B01J 29/04, B01J 29/06

(21) Application number: **90201332.5**

(22) Date of filing: **23.05.1990**

(54) **Defect-rich crystalline (metallo) silicates and process for preparing such (metallo) silicates**

Defektreiche, kristalline (Metallo)silikate sowie Verfahren zu deren Herstellung

(Métallo)silicates cristallins riches en défauts et leur procédé de préparation

(84) Designated Contracting States:
**AT BE CH DE DK ES FR GB GR IT LI LU NL SE**

(30) Priority: **02.06.1989 GB 8912699**

(43) Date of publication of application:
**05.12.1990 Bulletin 1990/49**

(73) Proprietor: **SHELL INTERNATIONALE
RESEARCH
MAATSCHAPPIJ B.V.
2596 HR Den Haag (NL)**

(72) Inventors:
- **Keijsper, Johannes Jacobus
NL-1031 CM Amsterdam (NL)**
- **Post, Martin Franciscus Maria
NL-1031 CM Amsterdam (NL)**

(56) References cited:
**EP-A- 0 124 364**

- **ZEOLITES, vol. 6, January 1986, pages 14-16,
Guildford, GB; G.L. WOOLERY et al.:
"Spectroscopic evidence for the presence of
internal silanols in highly siliceous ZSM-5"**

## Description

The present invention relates to defect-rich crystalline (metallo)silicates, a process for preparing such (metallo)silicates and to the use of these crystalline (metallo)silicates as catalysts or catalyst carriers.

In general, crystalline (metallo)silicates both in natural and in synthetic form are of particular interest since they find wide and promising application in industry as, for instance, catalyst carriers or catalysts in various types of (hydro)conversion processes.

At the present moment a large number of suitable methods for preparing the various crystalline (metallo)silicates has become available. The use of a template, in particular an organic nitrogen containing compound, in a reaction mixture wherein the various forming components are present in defined molar ratios is among the best known techniques in the synthesis of crystalline (metallo)silicates.

Crystalline (metallo)silicates obtained from such a reaction mixture generally contain in the as-synthesized form substantial amounts of template. In order to activate the crystalline products obtained the template is normally removed substantially. This is usually achieved by subjecting the crystalline products to a calcination treatment.

In the calcination treatment the template and/or degradation products thereof will substantially be removed from the crystalline products. Thus, active substantially template-free crystalline (metallo)silicates may be obtained which can suitably be used in various processes.

It should be noted, however, that it is well known that not all crystalline (metallo)silicates in the as-synthesized form can suitably be subjected to a calcination treatment normally necessary to remove the template and/or degradation products thereof. Some crystalline (metallo)silicates apparently have such a poor intrinsic stability that during a calcination treatment their crystalline structures will collapse.

Crystalline (metallo)silicates can generally be defined as built up of three-dimensional frameworks of tetrahedral $SiO_4$ and $MO_4$ units (the so-called $TO_4$ units, T=tetrahedral) which are corner-linked via oxygen atoms. In this respect each Si site should theoretically have four oxygen corner-linked T-neighbours. These Si sites are so-called $Q^4$ sites. It will be understood that the Si sites which terminate the framework will have at most three oxygen corner-linked T-neighbours, which is normally the case. Such Si sites are referred to as $Q^3$ sites and form a relatively low percentage of the total number of Si sites (typically less than 1% for particles of 1 micron). Recently it has been recognized in silica-rich molecular sieves that Si sites having only three oxygen-linked T-neighbours (internal $Q^3$ sites) also exist in the internal framework. It is known that direct information about the presence of these internal $Q^3$ sites can very conveniently be obtained from magic-angle-spinning (MAS) solid-state $^{29}$Si-NMR spectroscopy. In the context of the present specification these internal $Q^3$ sites are hereinafter to be referred to as defects.

It is known to those skilled in the art that after substantial removal of the template from the zeolite by a standard calcination procedure (550 °C in air for a period of four hours) defects are hardly present anymore.

Reference is made in this respect also to Zeolites, 1986, Vol 6, pp 14-16, wherein it is concluded that in some calcined ZSM-5 samples the ion-exchange capacity in excess of the framework aluminium content observed is due to a small amount of internal silanol defect sites.

It has now been found that substantially template-free crystalline microporous (metallo)silicates can be provided in which a substantial amount of the internal defects initially present in the as-synthesized form is retained.

Such crystalline (metallo)silicates are of particular interest since they may suitably be used to incorporate catalytically active species into the framework in an amount that substantially exceeds the normal metal ion exchange value.

Object of the present invention is to provide substantially template-free crystalline microporous (metallo)silicates which comprise a substantial number of internal framework defects.

The present invention thus relates to crystalline microporous (metallo)silicates having a maximum M/Si molar ratio of 0.03, wherein M represents at least one of Al, Fe, B, Ga or Ti, containing less than 1%wt of organic template (originated) material and having a Relative Defect Retention (RDR)-value of 0.1-1, wherein the RDR-value is defined as $(C - C^*)/(i - C^*)$, wherein C represents the percentage of defects present in the calcined form, $C^*$ represents the percentage of defects when subjecting the corresponding at least 1%wt of organic template (originated) material containing crystalline (metallo)silicate to a standard calcination treatment in air at a temperature of 550 °C for a period of 4 hours, wherein i represents the percentage of defects initially present in the uncalcined corresponding organic template containing crystalline (metallo)silicate, wherein a defect is an internal $Q^3$ site, that is a Si-site having only three oxygen-linked T-neighbours in the internal framework and wherein $i > C^*$.

It should be noted that the RDR-value is a measure of the extent to which initially present defects in a template containing crystalline (metallo)silicate can be retained, relative to the extent to which defects would be retained if the material were to be subjected to a standard calcination treatment in air at a temperature of 550 °C for a period of 4 hours.

This means that the crystalline (metallo)silicates according to the present invention contain a percentage of defects (C) which is larger than would be retained (expressed as $C^*$) when subjecting the uncalcined corresponding template containing crystalline (metallo)silicate to a standard calcination in air at a temperature of 550 °C for a period of 4 hours.

This excess of defects, expressed as $(C - C^*)$, is referred to as the Absolute Defect Retention (ADR).

Suitably, the crystalline microporous (metallo)silicates according to the present invention have a ADR of at least 2%, preferably at least 4%.

The uncalcined organic template containing crystalline (metallo)silicates suitably contain a percentage of defects (i), such that (i - C*) is at least 4%, preferably at least 10%.

The crystalline microporous (metallo)silicates according to the present invention preferably have a RDR value of 0.20-0.90, more preferably 0.30-0.90.

Preferably, the crystalline microporous (metallo)silicates according to present invention have a maximum M/Si molar ratio of 0.015. In particular, the present invention relates to crystalline microporous (metallo)silicates as described hereinabove wherein M represents aluminium.

The crystalline microporous (metallo)silicates according to the present invention comprise various structures, provided that they fulfil the requirements as defined hereinbefore. For instance, defect-rich forms of ZSM-type (metallo)silicates, SCS-type (metallo)silicates, ferrierite, mordenite, zeolite $\beta$ and other types of zeolitic (metallo)silicates are examples in accordance with the present invention.

Suitably one or more catalytically active species are incorporated in the crystalline microporous (metallo)silicates according to the present invention. Preferably, the catalytically active species comprise one or more salts of metals of Group IVB, VB, VIB, VIIB, or VIII as well as ammonium ions and/or protons. They can be incorporated by well-known techniques such as, for example, impregnation and ion-exchange. It will be clear to those skilled in the art that the crystalline microporous (metallo)silicates according to the present invention can suitably be applied as catalyst or catalyst carrier in a variety of processes, and can also be exposed to any suitable regeneration method known in the art.

The present invention further relates to a process for the preparation of crystalline microporous (metallo)silicates as defined hereinabove, which comprises subjecting a crystalline (metallo)silicate having a maximum M/Si molar ratio of 0.03, wherein M represents at least one of Al, Fe, B, Ga or Ti, and containing at least 1%wt of template to a heat treatment which is carried out in the presence of oxygen at a temperature of 400-600 °C and a pressure of at most 500 mbar for at least 1 hour.

Preferably, the heat treatment in the process according to the present invention is carried out at a temperature of 450-500 °C. The heat treatment is conviently carried out at a pressure of less than 350 mbar and may be carried out at a pressure less than than 20 mbar, and for a period of time of at least 2 hours. The heat treatment in the present process is suitably carried out in air. Other oxygen-containing gases can also suitably be used.

The crystalline (metallo)silicate to be subjected to the present process contains at least 1%wt of template. The template comprises in principle all templates which can suitably be used in the perparation of crystalline (metallo)silicates. Suitable examples are organic templates as (un)substituted secondary or tertiary amines such as di- and tri-alkanolamines, dioxane, trioxane, morpholine, and templates which comprise a quaternary ammonium cation. Templates comprising a quaternary ammonium cation are preferred. Preferably, the crystalline (metallo)silicates to be subjected to the present process have a maximum M/Si molar ratio of 0.015. Preferably, crystalline aluminosilicates are subjected to the heat treatment according to the present invention.

The invention will now be illustrated by the following Examples.

Example 1

A crystalline microporous (metallo)silicate according to the present invention was prepared as follows:
Waterglass (ex PQ) was added to a solution containing 96 %wt $H_2SO_4$, octane-1,8-diamine (OD) and water to give a starting mixture of the following molar composition: 25 $SiO_2$:7.4 $Na_2O$:8.4 $H_2SO_4$:7.5 OD:1000 $H_2O$. The product obtained was subsequently kept at 160 °C for a period of 72 hours in a stirred autoclave. The crystalline product thus obtained (ZSM-48) was separated by filtration, water washed and dried at 120 °C. Two samples of the product obtained were exposed to respectively a heat treatment according to the present invention which was carried out in the presence of oxygen at a temperature of 470 °C, a pressure of 5 mbar for a period of 16 hours and a calcination treatment in air at a temperature of 550 °C for a period of 4 hours.

Example 2

An experiment was carried out in substantially the same manner as described in Example 1, except that the starting mixture contained 96 %wt $H_2SO_4$,tetramethylammonium bromide (TMABr), $NaAlO_2$, NaOH, octane-1,8-diamine (OD), silica and water, and that the heat treatment according to the present invention was carried out at 460 °C. The molar composition of the starting mixture was as follows:
25 $SiO_2$:0.1 $Al_2O_3$:7.4 $Na_2O$:7.4 $H_2SO_4$:7.5 OD:0.75 TMABr:1000 $H_2O$. The crystalline product obtained was of the ZSM-48 type.

Example 3

An experiment was carried out in substantially the same manner as described in Example 1, except that the starting mixture contained silica, sodium aluminate, sodium hydroxide, tetramethylammonium hydroxide (TMAOH), tetramethylammonium chloride (TMACl) and water, that the product obtained was kept at 190 °C for a period of 64 hours in a stirred autoclave, and that the heat treatment was carried out at 20 mbar. The molar composition of the starting mixture was as follows:
25 $SiO_2$:0.025 $Al_2O_3$:0.5 $Na_2O$:5 $TMA_2O$:8 TMACl:400 $H_2O$. The crystalline product obtained was of the SCS-5 type.

Example 4

An experiment was carried out in substantially the same manner as described in Example 1, except that the starting mixture contained silica, sodium aluminate, sodium hydroxide, tetrapropylammonium hydroxide (TPAOH) and water, that the product obtained was kept at 170 °C for a period of 32 hours in a stirred autoclave, and that the heat treatment was carried out at 10 mbar. The molar composition of the starting mixture was as follows:
25 $SiO_2$:0.025 $Al_2O_3$:$Na_2O$:4.5 $TPA_2O$:450 $H_2O$. The crystalline product obtained was of the ZSM-5 type.

Example 5

An experiment was carried out in substantially the same manner as described in Example 4, except that the starting mixture contained ammonia instead of sodium aluminate, and that the heat treatment was carried out at 460 °C and 20 mbar. The molar composition of the starting mixture was as follows:
25 $SiO_2$:$NH_3$:0.5 $Na_2O$:2.5 $TPA_2O$:450 $H_2O$. The crystalline product obtained was of the ZSM-5 type.

The values of C, C*, ADR, and i, expressed as percentages, and RDR as determined with solid-state $^{29}$Si-NMR-spectroscopy in the experiments described, and having the meanings as defined hereinbefore, are together with the Si/Al molar ratios of the untreated materials summarized in Table 1.

Table 1

|  | Si/Al | i | C* | C | RDR | ADR |
|---|---|---|---|---|---|---|
| Example 1 | 770 | 8 | 3 | 7 | 0.8 | 4 |
| 2 | 110 | 8 | 0 | 5 | 0.6 | 5 |
| 3 | 80 | 35 | 5 | 12 | 0.2 | 7 |
| 4 | 220 | 16 | 1 | 6 | 0.3 | 5 |
| 5 | >800 | 24 | 10 | 15 | 0.4 | 5 |

It will be clear from the results presented in Table 1 that the crystalline (metallo)silicates according to the present invention contain substantially larger amounts of defect sites than the corresponding crystalline (metallo)silicates which have been exposed to a calcination treatment in air at 550 °C for a period of 4 hours.

Example 6

An experiment was carried out in substantially the same manner as described in Example 5, except that the starting mixture contained 2 molar equivalents of ammonia and no sodium hydroxide. The molar compostion of the starting mixture was as follows: 25 $SiO_2$:2 $NH_3$:2.5 $TPA_2O$:450 $H_2O$. The product obtained was kept at 170 °C for 30 hours in a stirred autoclave. The crystalline product obtained was of the ZSM-5 type, having a Si/Al molar ratio > 800:1. Two samples of the product obtained were exposed to a heat treatment at 450 °C according to the present invention at 300 and 100 mbar, respectively. The values of i, C*, C, RDR and ADR were for the treatment at 300 mbar 24, 1, 9, 0.4 and 8 and for the treatment at 100 mbar 24, 1, 16, 0.7 and 15.

**Claims**

**Claims for the following Contracting States : AT, BE, CH, DE, DK, FR, GB, IT, LI, LU, NL, SE**

1. Crystalline microporous (metallo)silicates having a maximum M/Si molar ratio of 0.03, wherein M represents at least one of Al, Fe, B, Ga or Ti, containing less than 1 %wt of organic template (originated) material and having a Relative Defect Retention (RDR)-value of 0.1-1, wherein the RDR-value is defined as $(C - C^*)/(i - C^*)$, wherein C represents the percentage of defects present in the calcined form, $C^*$ represents the percentage of defects when subjecting the corresponding at least 1%wt of organic template (originated) material containing crystalline (metallo)silicate to a standard calcination treatment in air at a temperature of 550 °C for a period of 4 hours, wherein i represents the percentage of defects initially present in the uncalcined corresponding organic template containing crystalline (metallo)silicate, wherein a defect is an internal $Q^3$ site, that is a Si-site having only three oxygen-linked T-neighbours in the internal framework, and wherein $i>C^*$.

2. Crystalline microporous (metallo)silicates according to claim 1 having a RDR-value of 0.20-0.90, more preferably 0.30-0.90.

3. Crystalline microporous (metallo)silicates according to claim 1 or 2 having an Absolute Defect Retention (ADR) - value of at least 2%, more preferably at least 4%, wherein the ADR-value is defined as $(C - C^*)$, and C and $C^*$ have the meanings as described hereinbefore.

4. Crystalline microporous (metallo)silicates according to any one of claims 1-3 having a maximum M/Si molar ratio of 0.015.

5. Crystalline microporous (metallo)silicates according to any one of claims 1-4 wherein M represents Al.

6. Crystalline microporous (metallo)silicates according to any one of claims 1-5, wherein one or more catalytically active species have been incorporated, in particular catalytically active compounds comprising one or more salts of metals of Group IVB, VB, VIB,VIIB or VIII.

7. Process for the preparation of crystalline microporous (metallo)silicates as defined in any one of claims 1-6, which comprises subjecting a crystalline (metallo)silicate having a maximum M/Si molar ratio of 0.03, wherein M represents at least one of Al, Fe, B, Ga or Ti, and containing at least 1 %wt of template to a heat treatment which is carried out in the presence of oxygen at a temperature of 400-600 °C and a pressure of at most 500 mbar for at least 1 hour.

8. Process according to claim 7, in which the calcination treatment is carried out at a temperature of 450-500 °C.

9. Process according to claim 7 or 8, in which the calcination treatment is carried out at a pressure of less than 350 mbar.

10. Process according to any one of claims 7-9, in which the calcination treatment is carried out for at least 2 hours.

11. Process according to any one of claims 7-10, in which the calcination treatment is carried out in air.

12. Process according to any one of claims 7-11, in which the template comprises an organic cation or a precursor thereof, in particular a quaternary ammonium cation.

13. Process according to any one of claims 7-12, in which the crystalline (metallo)silicate has a maximum M/Si molar ratio of at least 0.015.

14. Process for carrying out catalytic reactions in which use is made of a crystalline microporous (metallo)silicate as claimed in any one of claims 1-6.

**Claims for the following Contracting States : ES, GR**

1. Process for the preparation of crystalline microporous (metallo)silicates having a maximum M/Si molar ratio of 0.03, wherein M represents at least one of Al, Fe, B, Ga or Ti, containing less than 1 %wt of organic template (originated) material and having a Relative Defect Retention (RDR)-value of 0.1-1, wherein the RDR-value is defined as

(C - C*)/(i - C*) , wherein C represents the percentage of defects present in the calcined form, C* represents the percentage of defects when subjecting the corresponding at least 1%wt of organic template (originated) material containing crystalline (metallo)silicate to a standard calcination treatment in air at a temperature of 550 °C for a period of 4 hours, wherein i represents the percentage of defects initially present in the uncalcined corresponding organic template containing crystalline (metallo)silicate, wherein a defect is an internal $Q^3$ site, that is a Si-site having only three oxygen-linked T-neighbours in the internal framework, and wherein i>C*, which comprises subjecting a crystalline (metallo)silicate having a maximum M/Si molar ratio of 0.03, wherein M represents at least one of Al, Fe, B, Ga or Ti, and containing at least 1 %wt of template to a heat treatment which is carried out in the presence of oxygen at a temperature of 400-600 °C and a pressure of at most 500 mbar for at least 1 hour.

2. Process according to claim 1 in which the crystalline microporous (metallo)silicates have a RDR-value of 0.20-0.90, more preferably 0.30-0.90.

3. Process according to claim 1 or 2, in which the crystalline microporous (metallo)silicates have an Absolute Defect Retention (ADR)-value of at least 2%, more preferably at least 4%, wherein the ADR-value is defined as (C - C*), and C and C* have the meanings as described hereinbefore.

4. Process according to any one of claims 1-3, in which the crystalline microporous (metallo)silicates have a maximum M/Si molar ratio of 0.015.

5. Process according to any one of claims 1-4 wherein M represents Al.

6. Process according to any one of claims 1-5, in which into the crystalline microporous (metallo)silicates, one or more catalytically active species have been incorporated, in particular catalytically active compounds comprising one or more salts of metals of Group IVB, VB, VIB, VIIB or VIII.

7. Process according to any one of claims 1 to 6, in which the calcination treatment is carried out at a temperature of 450-500 °C.

8. Process according to any one of claims 1 to 7, in which the calcination treatment is carried out at a pressure of less than 350 mbar.

9. Process according to any one of claims 1 to 8, in which the calcination treatment is carried out for at least 2 hours.

10. Process according to any one of claims 1 to 9, in which the calcination treatment is carried out in air.

11. Process according to any one of claims 1 to 10, in which the template comprises an organic cation or a precursor thereof, in particular a quaternary ammonium cation.

12. Process according to any one of claims 1 to 11, in which the crystalline (metallo)silicate has a maximum M/Si molar ratio of at least 0.015.

13. Process for carrying out catalytic reactions in which use is made of a crystalline microporous (metallo)silicate as defined in any one of claims 1-6.

**Patentansprüche**

**Patentansprüche für folgende Vertragsstaaten : AT, BE, CH, DE, DK, FR, GB, IT, LI, LU, NL, SE**

1. Kristalline mikroporöse (Metall)silicate mit einem maximalen M/Si-Molverhältnis von 0,03, worin M für wenigstens eines von Al, Fe, B, Ga oder Ti steht, mit einem Gehalt an weniger als 1 Gew.-% an organischem (grundlegendem) Matrizenmaterial und mit einem relativen Defektretentionswert (RDR-Wert) von 0,1-1, worin der RDR-Wert als (C - C*)/(i - C*) definiert ist, worin C den Prozentsatz an Defekten darstellt, die in der calcinierten Form vorliegen, C* den Prozentsatz an Defekten darstellt, wenn das korrespondierende, wenigstens 1 Gew.-% an organischem (grundlegendem) Matrizenmaterial enthaltende kristalline (Metall)silicat einer Standard-Calcinierungsbehandlung an Luft bei einer Temperatur von 550°C während einer Dauer von 4 Stunden unterworfen wird, i den Prozentsatz an Defekten darstellt, die ursprünglich in dem uncalcinierten korrespondierenden kristallinen (Metall)silicat mit einem Gehalt an der organischen Matrize vorliegen, wobei ein Defekt eine interne $Q^3$-Stelle ist, d.i. eine Si-Stelle, die nur drei Sauerstoff-verknüpfte T-Nachbarn im inneren Gitterwerk aufweist und worin i>C* ist.

2. Kristalline mikroporöse (Metall)silicate nach Anspruch 1 mit einem RDR-Wert von 0,20 bis 0,90, stärker bevorzugt von 0,30 bis 0,90.

3. Kristalline mikroporöse (Metall)silicate nach Anspruch 1 oder 2 mit einem absoluten Defektretentionswert (ADR-Wert) von wenigstens 2%, stärker bevorzugt von wenigstens 4%, worin der ADR-Wert als (C - C*) definiert ist und C und C* die zuvor beschriebenen Bedeutungen besitzen.

4. Kristalline mikroporöse (Metall)silicate nach einem der Ansprüche 1 bis 3 mit einem maximalen M/Si-Molverhältnis von 0,015.

5. Kristalline mikroporöse (Metall)silicate nach einem der Ansprüche 1 bis 4, worin M für Al steht.

6. Kristalline mikroporöse (Metall)silicate nach einem der Ansprüche 1 bis 5, worin eine oder mehrere katalytisch aktive Verbindungen eingebaut worden sind, insbesondere katalytisch aktive Verbindungen mit einem Gehalt an einem oder an mehreren Salzen von Metallen der Gruppe IVB, VB, VIB, VIIB oder VIII.

7. Verfahren zur Herstellung von kristallinen mikroporösen (Metall)silicaten, wie in einem der Ansprüche 1 bis 6 definiert, welches ein Ausführen einer Wärmebehandlung an einem kristallinen (Metall)silicat mit einem maximalen M/Si-Molverhältnis von 0,03, worin M für wenigstens eines von Al, Fe, B, Ga oder Ti steht, und mit einem Gehalt an wenigstens 1 Gew.-% Matrizenmaterial umfaßt, welche Wärmebehandlung in Anwesenheit von Sauerstoff bei einer Temperatur von 400 bis 600°C und bei einem Druck von höchstens 500 mbar während wenigstens 1 Stunde ausgeführt wird.

8. Verfahren nach Anspruch 7, worin die Calcinierungsbehandlung bei einer Temperatur von 450 bis 500°C ausgeführt wird.

9. Verfahren nach Anspruch 7 oder 8, worin die Calcinierungsbehandlung bei einem Druck von unter 350 mbar ausgeführt wird.

10. Verfahren nach einem der Ansprüche 7 bis 9, worin die Calcinierungsbehandlung für wenigstens 2 Stunden ausgeführt wird.

11. Verfahren nach einem der Ansprüche 7 bis 10, worin die Calcinierungsbehandlung an Luft ausgeführt wird.

12. Verfahren nach einem der Ansprüche 7 bis 11, worin das Matrizenmaterial ein organisches Kation oder einen Vorläufer hievon umfaßt, insbesondere ein quaternäres Ammoniumkation.

13. Verfahren nach einem der Ansprüche 7 bis 12, worin das kristalline (Metall)silicat ein maximales M/Si-Molverhältnis von wenigstens 0,015 aufweist.

14. Verfahren zur Durchführung katalytischer Reaktionen, in denen von einem kristallinen mikroporösen (Metall)silicat, wie in einem der Ansprüche 1 bis 6 beansprucht, Gebrauch gemacht wird.

**Patentansprüche für folgende Vertragsstaaten : ES, GR**

1. Verfahren zur Herstellung von kristallinen mikroporösen (Metall)silicaten mit einem maximalen M/Si-Molverhältnis von 0,03, worin M für wenigstens eines von Al, Fe, B, Ga oder Ti steht, mit einem Gehalt an weniger als 1 Gew.-% an organischem (grundlegendem) Matrizenmaterial und mit einem relativen Defektretentionswert (RDR-Wert) von 0,1-1, worin der RDR-Wert als (C - C*)/(i - C*) definiert ist, worin C den Prozentsatz an Defekten darstellt, die in der calcinierten Form vorliegen, C* den Prozentsatz an Defekten darstellt, wenn das korrespondierende, wenigstens 1 Gew.-% an organischem (grundlegendem) Matrizenmaterial enthaltende kristalline (Metall)silicat einer Standard-Calcinierungsbehandlung an Luft bei einer Temperatur von 550°C während einer Dauer von 4 Stunden unterworfen wird, i den Prozentsatz an Defekten darstellt, die ursprünglich in dem uncalcinierten korrespondierenden kristallinen (Metall)silicat mit einem Gehalt an der organischen Matrize vorliegen, wobei ein Defekt eine interne $Q^3$-Stelle ist, d.i. eine Si-Stelle, die nur drei Sauerstoff-verknüpfte T-Nachbarn im inneren Gitterwerk aufweist und worin i>C*, welches Verfahren ein Ausführen einer Wärmebehandlung an einem kristallinen (Metall)silicat mit einem maximalen M/Si-Molverhältnis von 0,03, worin M für wenigstens eines von Al, Fe, B, Ga oder Ti steht, und mit einem Gehalt an wenigstens 1 Gew.-% Matrizenmaterial umfaßt, welche Wärmebehandlung in Anwesenheit von Sauerstoff bei einer Temperatur von 400 bis 600°C und bei einem Druck von höchstens 500 mbar während wenigstens 1 Stunde ausgeführt wird.

2. Verfahren nach Anspruch 1, worin die kristallinen mikroporösen (Metall)silicate einen RDR-Wert von 0,20 bis 0,90, stärker bevorzugt von 0,30 bis 0,90 aufweisen.

3. Verfahren nach Anspruch 1 oder 2, worin die kristallinen mikroporösen (Metall)silicate einen absoluten Defektretentionswert (ADR-Wert) von wenigstens 2%, stärker bevorzugt von wenigstens 4% aufweisen, worin der ADR-Wert als (C - C*) definiert ist und C und C* die zuvor beschriebenen Bedeutungen besitzen.

4. Verfahren nach einem der Ansprüche 1 bis 3, worin die kristallinen mikroporösen (Metall)silicate ein maximales M/Si-Molverhältnis von 0,015 aufweisen.

5. Verfahren nach einem der Ansprüche 1 bis 4, worin M für Al steht.

6. Verfahren nach einem der Ansprüche 1 bis 5, worin eine oder mehrere katalytisch aktive Verbindungen in die kristallinen mikroporösen (Metall)silicate eingebaut worden sind, insbesondere katalytisch aktive Verbindungen mit einem Gehalt an einem oder an mehreren Salzen von Metallen der Gruppe IVB, VB, VIB, VIIB oder VIII.

7. Verfahren nach einem der Ansprüche 1 bis 6, worin die Calcinierungsbehandlung bei einer Temperatur von 450 bis 500°C ausgeführt wird.

8. Verfahren nach einem der Ansprüche 1 bis 7, worin die Calcinierungsbehandlung bei einem Druck von unter 350 mbar ausgeführt wird.

9. Verfahren nach einem der Ansprüche 1 bis 8, worin die Calcinierungsbehandlung für wenigstens 2 Stunden ausgeführt wird.

10. Verfahren nach einem der Ansprüche 1 bis 9, worin die Calcinierungsbehandlung an Luft ausgeführt wird.

11. Verfahren nach einem der Ansprüche 1 bis 10, worin das Matrizenmaterial ein organisches Kation oder einen Vorläufer hievon umfaßt, insbesondere ein quaternäres Ammoniumkation.

12. Verfahren nach einem der Ansprüche 1 bis 11, worin das kristalline (Metall)silicat ein maximales M/Si-Molverhältnis von wenigstens 0,015 aufweist.

13. Verfahren zur Durchführung katalytischer Reaktionen, in denen von einem kristallinen mikroporösen (Metall)silicat, wie in einem der Ansprüche 1 bis 6 definiert, Gebrauch gemacht wird.

## Revendications

**Revendications pour les Etats contractants suivants : AT, BE, CH, DE, DK, FR, GB, IT, LI, LU, NL, SE**

1. (Métallo)silicates cristallins microporeux possédant un rapport molaire M/Si maximal de 0,03, où M représente au moins l'un des éléments Al, Fe, B, Ga ou Ti, contenant moins de 1% en poids de matière servant de gabarit ou de calibre organique (à l'origine) et possédant une valeur ou indice de rétention de défauts relative (RDR) de 0,1-1, où la valeur RDR est définie par le rapport $(C - C^*)/(i - C^*)$, où C représente le pourcentage de défauts présents dans la forme calcinée, C* représente le pourcentage de défauts lorsque l'on soumet le (métallo)silicate cristallin correspondant contenant au moins 1% en poids de matière (à l'origine) servant de gabarit ou calibre organique à un traitement de calcination standard à l'air à la température de 550°C pendant une période de 4 heures, où i représente le pourcentage de défauts initialement présents dans le (métallo)silicate cristallin contenant le calibre ou gabarit organique correspondant non calciné, un défaut étant ici un site $Q^3$ interne, c'est-à-dire un site Si ne possédant seulement que trois voisins T liés par de l'oxygène dans le cadre interne et où i>C*.

2. (Métallo)silicates cristallins microporeux suivant la revendication 1, possédant une valeur RDR de 0,20-0,90, plus avantageusement de 0,30-0,90.

**3.** (Métallo) silicates cristallins microporeux suivant la revendication 1 ou 2, possédant une valeur de rétention de défauts absolue (ADR) d'au moins 2%, plus avantageusement d'au moins 4%, où la valeur ADR est définie par (C - C*), et C et C* possèdent les significations qui leur ont été précédemment attribuées.

**4.** (Métallo)silicates cristallins microporeux suivant l'une quelconque des revendications 1 à 3, possédant un rapport molaire M/Si de 0,015.

**5.** (Métallo)silicates cristallins microporeux suivant l'une quelconque des revendications 1 à 4, caractérisés en ce que M représente Al.

**6.** (Métallo)silicates cristallins microporeux suivant l'une quelconque des revendications 1 à 5, caractérisés en ce qu'une ou plusieurs espèces catalytiquement actives ont été incorporées, plus particulièrement, des composés catalytiquement actifs comprenant un ou plusieurs sels des métaux appartenant aux groupes IVB, VB, VIB, VIIB et VIII.

**7.** Procédé de préparation de (métallo)silicates cristallins microporeux suivant l'une quelconque des revendications 1 à 6, caractérisé en ce que l'on soumet un (métallo)silicate cristallin possédant un rapport molaire M/Si maximal de 0,03, où M représente au moins l'un des éléments Al, Fe, B, Ga ou Ti, et contenant au moins 1% en poids de gabarit ou calibre à un traitement thermique que l'on entreprend en présence d'oxygène à une température de 400 à 600°C et sous une pression d'au maximum 500 mbars, pendant au moins 1 heure.

**8.** Procédé suivant la revendication 7, caractérisé en ce que l'on entreprend le traitement de calcination à une température de 450 à 500°C.

**9.** Procédé suivant la revendication 7 ou 8, caractérisé en ce que l'on entreprend le traitement de calcination à une pression inférieure à 350 mbars.

**10.** Procédé suivant l'une quelconque des revendications 7 à 9, caractérisé en ce que l'on entreprend le traitement de calcination pendant au moins 2 heures.

**11.** Procédé suivant l'une quelconque des revendications 7 à 10, caractérisé en ce que l'on entreprend le traitement de calcination à l'air.

**12.** Procédé suivant l'une quelconque des revendications 7 à 11, caractérisé en ce que le gabarit ou calibre comprend un cation organique ou un précurseur de celui-ci, plus particulièrement, un cation ammonium quaternaire.

**13.** Procédé suivant l'une quelconque des revendications 7 à 12, caractérisé en ce que le (métallo)silicate cristallin possède un rapport molaire M/Si d'au moins 0,015.

**14.** Procédé pour entreprendre des réactions catalytiques dans lesquelles on fait usage d'un (métallo)silicate cristallin microporeux suivant l'une quelconque des revendications 1 à 6.

**Revendications pour les Etats contractants suivants : ES, GR**

**1.** Procédé de préparation de (métallo)silicates cristallins microporeux possédant un rapport molaire M/Si maximal de 0,03, où M représente au moins l'un des éléments Al, Fe, B, Ga ou Ti, contenant moins de 1% en poids de matière servant de gabarit ou de calibre organique (à l'origine) et possédant une valeur ou indice de rétention de défauts relative (RDR) de 0,1-1, où la valeur RDR est définie par le rapport (C - C*)/(i - C*) , où C représente le pourcentage de défauts présents dans la forme calcinée, C* représente le pourcentage de défauts lorsque l'on soumet le (métallo)silicate cristallin correspondant contenant au moins 1% en poids de matière (à l'origine) servant de gabarit ou calibre organique à un traitement de calcination standard à l'air à la température de 550°C pendant une période de 4 heures, où i représente le pourcentage de défauts initialement présents dans le (métallo)silicate cristallin contenant le calibre ou gabarit organique correspondant non calciné, un défaut étant ici un site $Q^3$ interne, c'est-à-dire un site Si ne possédant seulement que trois voisins T liés par de l'oxygène dans le cadre interne et où i>C*, caractérisé en ce que l'on soumet un (métallo)silicate cristallin possédant un rapport molaire M/Si maximal de 0,03, où M représente au moins l'un des éléments Al, Fe, B, Ga ou Ti, et contenant au moins 1% en poids de gabarit ou calibre à un traitement thermique que l'on entreprend en présence d'oxygène à une température de 400 à 600°C et sous une pression d'au maximum 500 mbars, pendant au moins 1 heure.

2. Procédé suivant la revendication 1, caractérisé en ce que les (métallo)silicates cristallins microporeux possèdent une valeur RDR de 0,20-0,90, plus avantageusement de 0,30-0,90.

3. Procédé suivant la revendication 1 ou 2, caractérisé en ce que les (métallo)silicates cristallins microporeux possèdent une valeur de rétention de défauts absolue (ADR) d'au moins 2%, plus avantageusement d'au moins 4%, où la valeur ADR est définie par (C - C*), et C et C* possèdent les significations qui leur ont été précédemment attribuées.

4. Procédé suivant l'une quelconque des revendications 1 à 3, caractérisé en ce que les (métallo)silicates cristallins microporeux possèdent un rapport molaire M/Si de 0,015.

5. Procédé suivant l'une quelconque des revendications 1 à 4, caractérisé en ce que M représente Al.

6. Procédé suivant l'une quelconque des revendications 1 à 5, caractérisé en ce que, dans les (métallo)silicates cristallins microporeux, une ou plusieurs espèces catalytiquement actives ont été incorporées, plus particulièrement, des composés catalytiquement actifs comprenant un ou plusieurs sels des métaux appartenant aux groupes IVB, VB, VIB, VIIB et VIII.

7. Procédé suivant l'une quelconque des revendications 1 à 6, caractérisé en ce que l'on entreprend le traitement de calcination à une température de 450 à 500°C.

8. Procédé suivant l'une quelconque des revendications 1 à 7, caractérisé en ce que l'on entreprend le traitement de calcination à une pression inférieure à 350 mbars.

9. Procédé suivant l'une quelconque des revendications 1 à 8, caractérisé en ce que l'on entreprend le traitement de calcination pendant au moins 2 heures.

10. Procédé suivant l'une quelconque des revendications 1 à 9, caractérisé en ce que l'on entreprend le traitement de calcination à l'air.

11. Procédé suivant l'une quelconque des revendications 1 à 10, caractérisé en ce que le gabarit ou calibre comprend un cation organique ou un précurseur de celui-ci, plus particulièrement, un cation ammonium quaternaire.

12. Procédé suivant l'une quelconque des revendications 1 à 11, caractérisé en ce que le (métallo)silicate cristallin possède un rapport molaire M/Si d'au moins 0,015.

13. Procédé pour entreprendre des réactions catalytiques dans lesquelles on fait usage d'un (métallo)silicate cristallin microporeux suivant l'une quelconque des revendications 1 à 6.